# EUROPÄISCHE PATENTSCHRIFT

(11) **EP 3 470 714 B1**
(45) Veröffentlichungstag und Bekanntmachung des Hinweises auf die Patenterteilung: **10.11.2021**
(21) Anmeldenummer: 18194699.7
(22) Anmeldetag: 17.09.2018
(51) Int. Cl.: F16K 15/02, F01P 3/08, F01M 1/08, F16K 17/04

(54) **VENTIL ZUM EINSTELLEN EINES KÜHLFLUIDFLUSSES ZUR KOLBENKÜHLUNG**
VALVE FOR ADJUSTING A COOLING FLUID FLOW FOR COOLING PISTONS
SOUPAPE DE RÉGLAGE D'UN FLUX DE FLUIDE DE REFROIDISSEMENT DESTINÉ AU REFROIDISSEMENT DES PISTONS

(30) Priorität: 11.10.2017 DE 102017123664
(43) Veröffentlichungstag der Anmeldung: 17.04.2019
(73) Patentinhaber: MAN Truck & Bus SE, 80995 München (DE)
(72) Erfinder: Malischewski, Thomas, 91560 Heilsbronn (DE); Dietrich, Jens, 91560 Heilsbronn (DE)
(74) Vertreter: v. Bezold & Partner Patentanwälte - PartG mbB

(56) Entgegenhaltungen:
- DE-A1-102007 055 264
- DE-T5-112013 006 598
- JP-A- H08 246 871
- US-A1- 2006 076 193
- US-A1- 2014 255 222

## Beschreibung

Die Erfindung betrifft ein Ventil zum Einstellen eines Kühlfluidflusses zum Kühlen mehrerer Kolben und eine Vorrichtung zum Kühlen mehrerer Kolben.

Zur Kühlung von Kolben können Öleinspritzdüsen verwendet werden. Die Öleinspritzdüsen können Öl an eine Unterseite der Kolben zum Kühlen der Kolben spritzen.

Aus der DE 10 2005 022 460 A1 ist ein Verfahren zum Betreiben einer Kolbenkühlung einer Brennkraftmaschine bekannt. Eine Ölspritzdüse mit einem Düsenventil steht mit einer Ölversorgung in Verbindung. Das Düsenventil wird über einen Öldruck geöffnet. Schmieröl wird mittels einer Ölpumpe in einen Ölkanal gepumpt und die Ölspritzdüse mit Schmieröl versorgt. Die Ölspritzdüse wird bedarfsabhängig über eine Änderung des Öldrucks in der Ölversorgung deaktiviert. Als Düsenventil ist ein federkraftbeaufschlagtes Kugelventil vorgesehen.

Die US 5,819,692 A offenbart ein Motorschmiersystem mit einem rohrförmigen Ventilelement, das in einem Hauptöldurchgang angeordnet ist. Über das Ventilelement wird ein Ölfluss in Verzweigungsdurchgänge, die zu Sprühdüsen führen, abhängig von einem Kolbenkühlbedarf gesteuert. Das Ventilelement wird von einem thermostatischen Leistungselement betätigt.

Die DE 10 2007 055 264 A1 offenbart ein Rücklaufsperrventil in Form eines Eckventils für einen Ölkreislauf. Um die im Ölkreislauf auftretenden Verlustleistungen zu verringern, ist vorgesehen, dass der Ventilkörper zum Öffnen und Schließen quer zur Durchströmungsrichtung verlagerbar ist. Es ist ferner vorgesehen, dass der Ventilkörper an seiner Rückseite öldruckfrei gehalten ist.

Die JP H08 246871 A offenbart ein Ventil, das eine Ölzuführung zu Öleinspritzdüsen steuert. Das Ventil ist als ein Eckventil ausgeführt.

Die US 2014/0255222 A1 offenbart ein Ventil eines Ölkreislaufs, das als ein Durchgangsventil ausgeführt ist. Die Steuerflächen eines bewegbaren Ventilkörpers des Ventils sind in einem Fluidkanal zum Leiten des Öls angeordnet und dem Öl aus dem Fluidkanal ausgesetzt.

Die Erfindung geht von einem System mit einem zentralen Ventil für mehrere Einspritzdüsen aus. Der Erfindung liegt die Aufgabe zu Grunde, ein alternatives oder verbessertes Ventil vorzusehen, mit dem Nachteile im Stand der Technik überwunden werden können. Insbesondere soll das Ventil eine bedarfsabhängige Kolbenkühlung ermöglichen und keine unnötige Antriebsleistung einer Fluidpumpe verbrauchen.

Die Aufgabe wird gelöst durch ein Ventil und eine Vorrichtung gemäß den unabhängigen Ansprüchen. Vorteilhafte Weiterbildungen sind in den abhängigen Ansprüchen und der Beschreibung angegeben.

Das Ventil kann insbesondere als Drosselventil ausgebildet sein. Das Ventil ist zum Einstellen eines Kühlfluidflusses von einer Fluidquelle zu mehreren Einspritzdüsen zum Kühlen mehrerer Kolben einer Brennkraftmaschine geeignet. Das Ventil weist einen Fluidkanal zur Verbindung der Fluidquelle mit den mehreren Einspritzdüsen auf. Das Ventil weist ein Ventilelement, das zum Verändern eines Strömungsquerschnitts des Fluidkanals bewegbar, insbesondere verschiebbar, angeordnet ist, auf. Das Ventilelement ist in eine erste Position bewegbar, insbesondere verschiebbar, in der der Strömungsquerschnitt unbeeinflusst von dem Ventilelement ist.

Das Ventil verbraucht im vollständig geöffneten Zustand keine unnötige Antriebsleistung der Fluidpumpe. Der Grund hierfür liegt darin, dass das Ventilelement im vollständig geöffneten Zustand des Ventils in der ersten Position ist, in der der Strömungsquerschnitt unbeeinflusst von dem Ventilelement ist. D.h., das Ventilelement bewirkt keinen Druckverlust bei vollständiger Öffnung des Ventils.

Erfindungsgemäß ist eine Bewegung des Ventilelements abhängig von einem Fluiddruck des Kühlfluids. Das Ventil kann eine bedarfsgerechte Kühlung der Kolben dadurch ermöglichen, dass es abhängig von einem Fluiddruck des Kühlfluids öffnet. Bei höheren Motorleistungen stellt die Fluidpumpe mehr Kühlfluid bei einem höheren Druck zur Verfügung. Das Ventil kann sich dann bedarfsgerecht weiter öffnen, sodass der erhöhte Kühlbedarf der Kolben gedeckt werden kann.

Nicht erfindungsgemäß, ist es bspw. auch möglich, dass das Ventilelement in Abhängigkeit von einer Temperatur des Kühlfluids bewegbar, insbesondere verschiebbar, ist.

Nicht erfindungsgemäß ist es auch möglich, dass das Ventilelement verschwenkbar ist. Bspw. kann das Ventilelement als eine Klappe, insbesondere Drosselklappe, ausgebildet sein. Vorzugsweise kann die Klappe federbelastet sein. Insbesondere kann das Ventilelement in der ersten Position in einer Ventiltasche des Fluidkanals positioniert sein.

Insbesondere kann das Ventil in einer Kolbengalerie und/oder einem Hauptkühlfluidkanal, die/der stromaufwärts von den mehreren Einspritzdüsen angeordnet ist, angeordnet sein.

Erfindungsgemäß lässt das Ventilelement in der ersten Position den Kühlfluidfluss im Wesentlichen druckverlustfrei durch den Fluidkanal strömen. Damit ist gemeint, dass das Ventilelement in der ersten Position selbst keinen Druckverlust des durch den Fluidkanal strömenden Kühlfluids bewirkt. Insbesondere steht in der ersten Position des Ventilelements kein Abschnitt des Ventilelements im Weg der Strömung des Kühlfluids.

Vorzugsweise ist der Strömungsquerschnitt des Fluidkanals in der ersten Position des Ventilelements maximal.

In einer Ausführungsform bewegt sich das Ventilelement bei steigendem Fluiddruck des Kühlfluids in einer Richtung zu der ersten Position, sodass der Strömungsquerschnitt vergrößert wird. Alternativ oder zusätzlich bewegt sich das Ventilelement bei fallendem Fluidruck des Kühlfluids in einer Richtung entgegengesetzt zu der ersten Position, sodass der Strömungsquerschnitt verkleinert wird. Somit lässt das Ventil bei höheren Fluiddrücken mehr Fluid passieren, sodass ein höherer Kolbenkühlbedarf gedeckt werden kann.

In einer weiteren Ausführungsform ist das Ventilelement in der ersten Position außerhalb des Fluidkanals positioniert. Damit ist sichergestellt, dass das Ventilelement in der ersten Position keinen ungewünschten Druckverlust im Fluidkanal bewirkt, wie es beispielsweise bei federbelasteten Kugel-Rückschlagventilen der Fall wäre.

Erfindungsgemäß weist der Fluidkanal eine (Ventilelement-) Offnung auf, durch die das Ventilelement bewegbar, insbesondere verschiebbar, ist. Damit kann das Ventilelement zum Verringern des Strömungsquerschnitts des Fluidkanals durch die Öffnung in den Fluidkanal geschoben werden. Andererseits kann das Ventilelement zum Vergrößern des Strömungsquerschnitts des Fluidkanals durch die Öffnung aus dem Fluidkanal geschoben werden.

In einem bevorzugten Ausführungsbeispiel ist das Ventil ein Kolbenventil. Mit anderen Worten gesagt, das Ventilelement ist ein (druckbetätigter) Kolben.

Erfindungsgemäß weist das Ventilelement eine Steuerfläche auf, die sich vorzugsweise senkrecht zu einer Verschiebeachse des Ventilelements erstreckt. Das Kühlfluid wirkt zum Verschieben des Ventilelements auf die Steuerfläche, sodass das Ventilelement abhängig von dem Fluiddruck des Kühlfluids verschoben wird.

Erfindungsgemäß ist das Ventil als ein Durchgangsventil ausgebildet. Hierbei liegen Ein- und Austritt in einer gemeinsamen Richtung bzw. der Fluidkanal des Ventils erstreckt sich gradlinig.

Erfindungsgemäß ist die Steuerfläche in einer Steuerfluidkammer angeordnet, die außerhalb des Fluidkanals angeordnet ist. Ein Zuführkanal leitet Kühlfluid von stromaufwärts des Ventilelements in die Steuerfluidkammer. Damit kann beispielsweise bei einem Durchgangsventil eine Verschiebung des Ventilelements derart realisiert werden, dass das Ventilelement sich vollständig aus dem Fluidkanal heraus verschieben lässt.

Nicht erfindungsgemäß ist das Ventil als ein Eckventil ausgebildet. Bei einem Eckventil stehen Eintritt und Austritt im Winkel, insbesondere im rechten Winkel, zueinander. Der Fluidkanal verläuft angewinkelt.

In einer Weiterbildung ist die Steuerfläche eine Stirnfläche des Ventilelements. Hiermit kann beispielsweise bei einem Eckventil eine Verschiebung des Ventilelements derart realisiert werden, dass das Ventilelement sich vollständig aus dem Fluidkanal heraus verschieben lässt.

In einer weiteren Ausführungsvariante weist das Ventil einen Leckagekanal für aus dem Fluidkanal (bspw. über die Ventilelement-Öffnung im Fluidkanal und/oder über die Steuerfluidkammer) entwichenes Kühlfluid auf.

In einem Ausführungsbeispiel ist das Ventilelement entgegen der ersten Position, insbesondere durch ein elastisches Element (zum Beispiel eine Spiralfeder), vorgespannt. Damit öffnet sich das Ventil mit steigendem Fluiddruck gegen die Vorspannung durch das elastische Element.

In einem weiteren Ausführungsbeispiel ist das Ventilelement zwischen der ersten Position und einer zweiten Position, in der der Strömungsquerschnitt minimal oder Null ist, bewegbar, insbesondere verschiebbar. In Varianten, in denen der Strömungsquerschnitt in der zweiten Position minimiert wird, aber größer ist, ist sichergestellt, dass immer ein wenig Kühlfluid zu den Einspritzdüsen geleitet wird. In Varianten, in denen der Strömungsquerschnitt in der zweiten Position Null ist, kann ein Kühlfluidfluss zu den Einspritzdüsen vollständig blockiert werden.

Erfindungsgemäß ist die zweite Position von einem Anschlag für das Ventilelement begrenzt. Der Anschlag ist ein Teil der Ventilelement-Offnung des Fluidkanals.

Die Erfindung ist auch auf eine Vorrichtung zum Kühlen mehrerer Kolben einer Brennkraftmaschine gerichtet. Die Vorrichtung weist mehrere Einspritzdüsen, die vorzugsweise ohne eigene Fluidventile vorgesehen sind, auf. Die Vorrichtung weist eine Fluidquelle, insbesondere eine Ölpumpe, auf. Die Vorrichtung weist ein Ventil wie hierin offenbart auf, das in Fluidverbindung stromabwärts von der Fluidquelle und stromaufwärts von den mehreren Einspritzdüsen vorgesehen ist.

Die Vorrichtung erzielt die gleichen Vorteile wie das hierin offenbarte Ventil. Die Einspritzdüsen benötigen keine eigenen Fluidventile, da das Ventil der Vorrichtung als zentrales Ventil für alle Einspritzdüsen vorgesehen ist. Gegenüber Lösungen, die für jede Einspritzdüse ein eigenes Fluidventil vorsehen, ergibt sich ein deutlich vereinfachter und weniger störungsanfälliger Aufbau.

Die Erfindung ist auch auf ein Kraftfahrzeug, insbesondere ein Nutzfahrzeug (zum Beispiel ein Lastkraftwagen oder ein Omnibus) gerichtet. Das Kraftfahrzeug weist ein Ventil wie hierin offenbart oder eine Vorrichtung wie hierin offenbart auf.

Es ist auch möglich, das Ventil und/oder die Vorrichtung wie hierin offenbart beispielsweise für Personenkraftwagen, Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung einer Vorrichtung zum Kühlen von Kolben einer Brennkraftmaschine;
- Figur 2: ein Diagramm, das zwei Kolbenkühlkurven in Abhängigkeit von einer Motordrehzahl zeigt;
- Figur 3: ein Ventil mit einem ausgefahrenen Ventilelement gemäß einem ersten Ausführungsbeispiel der vorliegenden Offenbarung;
- Figur 4: das Ventil mit einem eingefahrenen Ventilelement gemäß dem ersten Ausführungsbeispiel der vorliegenden Offenbarung;
- Figur 5: ein Ventil mit einem ausgefahrenen Ventilelement gemäß einem nicht-erfindungsgemäßen, zweiten Ausführungsbeispiel der vorliegenden Offenbarung; und
- Figur 6: ein Ventil mit einem eingefahrenen Ventilelement gemäß dem nicht-erfindungsgemäßen, zweiten Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

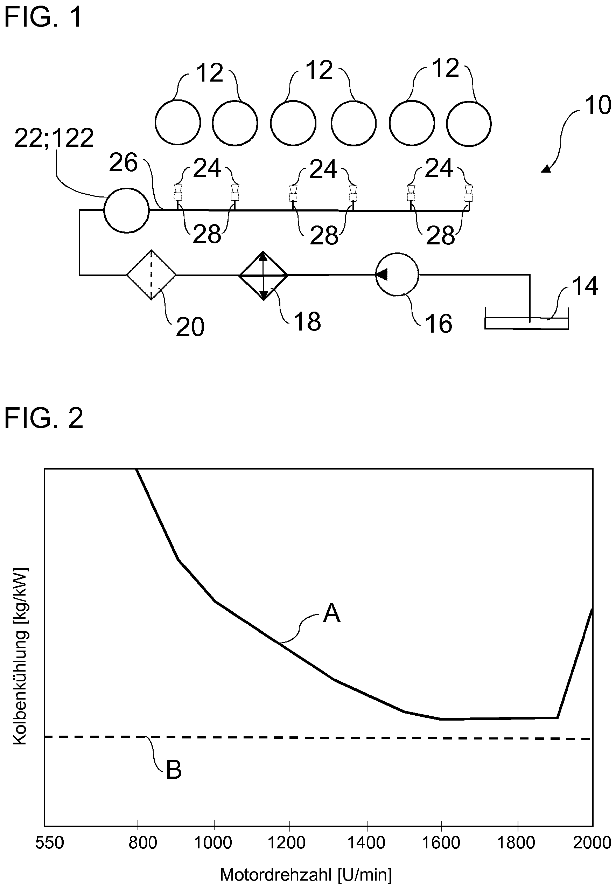

Die Figur 1 zeigt eine Vorrichtung 10 zum Kühlen und Schmieren von mehreren Kolben 12 einer Brennkraftmaschine. Die Brennkraftmaschine kann bspw. in einem Kraftfahrzeug, insbesondere einem Nutzfahrzeug, zum Antreiben desselben vorgesehen sein. Das Nutzfahrzeug kann bspw. ein Omnibus oder ein Lastkraftwagen sein.

Die Vorrichtung 10 weist ein Fluidreservoir 14, eine Fluidpumpe 16, einen Fluidkühler 18, einen Fluidfilter 20, ein Ventil 22; 122 und mehrere Einspritzdüsen (Kolbenkühldüsen) 24 auf.

Das Fluidreservoir 14 kann bspw. als eine Ölwanne der Brennkraftmaschine ausgebildet sein. Ein Schmierfluid, zum Beispiel Öl, kann als das Kühlfluid von der Vorrichtung 10 zum Kühlen und Schmieren der Kolben 12 verwendet werden.

Die Fluidpumpe 16 saugt das Kühlfluid/Schmierfluid an. Die Fluidpumpe 16 kann als Ölpumpe ausgebildet sein. Die Fluidpumpe 16 kann eine regelbare Pumpe sein. Ein von der Fluidpumpe 16 bereitgestellter Fluidstrom kann zum Abkühlen zu dem Fluidkühler 18 geleitet werden. Der gekühlte Fluidstrom kann zu dem Fluidfilter 20 geleitet werden. Der gekühlte und gefilterte Fluidstrom steht stromabwärts des Fluidfilters 20 zum Schmieren und Kühlen von Komponenten der Brennkraftmaschine, zum Beispiel den Kolben 12, zur Verfügung.

Der Fluidstrom wird zu dem Ventil 22; 122 geleitet. Das Ventil 22; 122 ist als ein Drosselventil zum Drosseln des Fluidstroms ausgebildet. Über das Ventil 22; 122 wird der zu den Einspritzdüsen geleitete Fluidstrom eingestellt. Das Ventil 22; 122 ist stromaufwärts von den mehreren Einspritzdüsen 24 vorgesehen. Im Einzelnen ist das Ventil 22; 122 stromaufwärts von einem Hauptkühlfluidkanal 26 vorgesehen, der sich in mehrere Einzelkühlfluidkanäle 28 verzweigt. Die Einzelkühlfluidkanäle 28 leiten den Fluidstrom von dem Hauptkühlfluidkanal 26 zu den mehreren Einspritzdüsen 24. Das Ventil 22; 122 kann beispielsweise in einer Kolbenkühlgalerie der Brennkraftmaschine angeordnet sein.

Die Einspritzdüsen 24 dienen als Kolbenkühldüsen. Die Einspritzdüsen 24 können ohne eigene Ventile vorgesehen sein. Die Einspritzdüsen 24 spritzen das Kühlfluid von unten an die Kolben 12, sodass die Kolben 12 während des Betriebs gekühlt werden. Schließlich gelangt das eingespritzte Kühlfluid wieder zurück in das Fluidreservoir 14. Damit bildet die Vorrichtung 10 einen Fluidkreislauf.

In Figur 2 sind zwei Kolbenkühlverläufe über eine Motordrehzahl einer Brennkraftmaschine gezeigt.

Prinzipiell kann ein Kühlbedarf der Kolben einer Brennkraftmaschine an die Motorleistung gekoppelt sein. Beispielsweise kann es notwendig sein, pro Kilowatt Motorleistung Schmierfluid in einem Bereich von 4-7 kg/h zum Kühlen der Kolben über Einspritzdüsen bereitzustellen.

Eine durchgezogene Kurve A zeigt eine beispielhafte herkömmliche Ist-Kolbenkühlung. Eine gestrichelte Kurve B zeigt eine bespielhafte Soll-Kolbenkühlung. Bei der Kurve A wird eine starre Fluidpumpe verwendet und es findet keine Regelung statt. Wie zu sehen ist, wird in einem niedrigen Drehzahlbereich ein deutlich erhöhtes Kühlangebot für die Kolben bereitgestellt. Im Bereich zwischen 600 U/min und 1400 U/min geben Verbraucher wie ein Turbolader oder Lager (zum Beispiel Hauptlager und Pleuellager der Kurbelwelle) den benötigten Fluiddruck vor. Die Kurve B zeigt, dass die Soll-Kolben Kühlleistung in Kilogramm pro Kilowatt Motorleistung über die Motordrehzahl konstant ist.

Beim Vergleich der Kurven A und B fällt zudem auf, dass die herkömmliche Kolbenkühlung insbesondere im Hauptfahrbereich eines Nutzfahrzeugs zwischen 1000 U/min und 1400 U/min ein deutlich überhöhtes Kühlangebot für den Kolben bereitstellt. Damit einher geht ein unnötig hoher Energieverbrauch der Fluidpumpe.

Die vorliegende Offenbarung ist u.a. darauf gerichtet, die Ist-Kolbenkühlung der Soll-Kolbenkühlung anzunähern. Unter Bezugnahme auf Figur 1 wird dazu vorgeschlagen, das Ventil 22; 122 in oder stromaufwärts des Hauptkühlfluidkanals 26 anzuordnen. Das Ventil 22; 122 ist als zentrales Ventil für alle Einspritzdüsen 24 vorgesehen. Wie anhand der nachfolgenden Ausführungsbeispiele im Detail erläutert ist, ist das Ventil 22; 122 dazu vorgesehen, den (Kühl-) Fluidstrom zu den Einspritzdüsen 24 an den tatsächlichen Bedarf der Kolben 12 anzupassen. Dazu öffnet sich das Ventil 22; 122 bspw. mit steigendem Fluiddruck immer weiter, sodass bei höheren Fluiddrücken mehr Fluid zu den Einspritzdüsen 24 geleitet wird. Zusätzlich wird vorgeschlagen, das Ventil 22; 122 so zu konstruieren, dass es im vollständig geöffneten Zustand im Wesentlichen keinen Druckverlust des hindurchströmenden Fluidstroms bewirkt. Damit kann insbesondere ein Nachteil von federbelasteten Kugel-Rückschlagventil überwunden werden, die konstruktionsbedingt auch bei voller Öffnung einen erheblichen Druckverlust dadurch generieren, dass eine Ventilkugel des Rückschlagventils mitten im Fluidkanal positioniert ist und von den Fluidstrom umströmt werden muss. Dieses Mehr an Druckverlust bei Kugel-Rückschlagventil muss von der Fluidpumpe aufgebracht werden und kostet unnötige Antriebsleistung. Dagegen ist das Ventil 22; 122 so ausgebildet, dass bei vollständiger Öffnung des Ventils 22; 122 kein Druckverlust durch das Ventilelement bewirkt wird. Somit ist keine unnötige Antriebsleistung zum Ausgleichen eines Druckverlustes notwendig.

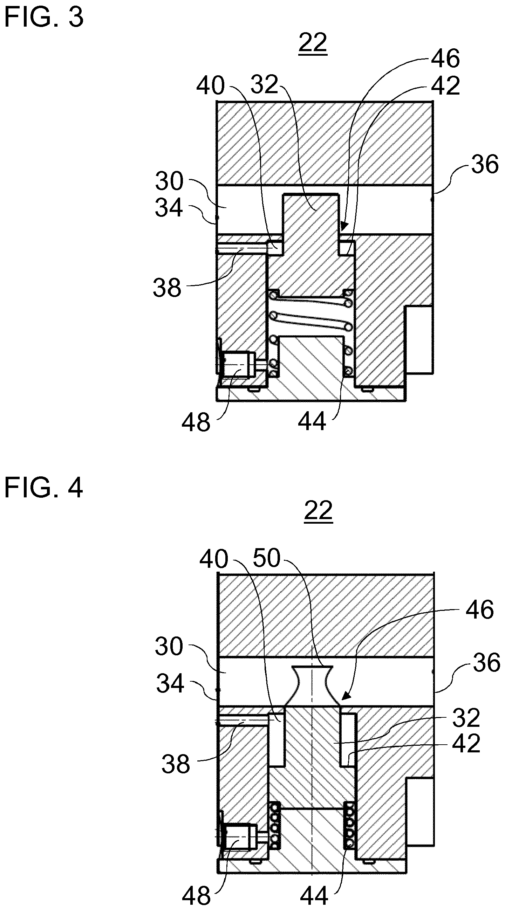

Die Figuren 3 und 4 zeigen ein erstes Ausführungsbeispiel für das Ventil 22.

Das Ventil 22 weist einen Fluidkanal 30 und ein Ventilelement 32 auf.

Der Fluidkanal 30 erstreckt sich zwischen einer Eintrittsöffnung 34 und einer Austrittsöffnung 36 gradlinig. Damit ist das Ventil 22 als ein Durchgangsventil ausgebildet.

Das Ventilelement 32 kann zum Verringern eines Strömungsquerschnitts des Fluidkanals 30 in den Fluidkanal 30 verschoben werden. Gleichermaßen kann das Ventilelement 32 zum Vergrößern eines Strömungsquerschnitts des Fluidkanals 30 aus dem Fluidkanal 30 verschoben werden. Das Ventilelement 32 dient als ein Kolben. Damit ist das Ventil 22 als ein Kolbenventil ausgebildet.

Eine Verschiebung des Ventilelements 32 wird durch einen Druck des Kühlfluids bewirkt. Damit ist das Ventilelement 32 ein eigenmediumbetätigtes Ventil. Im Einzelnen wird von einer Stelle stromaufwärts des Ventilelements 32 Kühlfluid über einen Zuführkanal 38 zu einer Steuerfluidkammer 40 des Ventils 22 geleitet. Das in die Steuerfluidkammer 40 geleitete Kühlfluid füllt die Steuerfluidkammer 40 und liegt an einer Steuerfläche 42 des Ventilelements 32 an. Mit zunehmendem Fluiddruck kann das Ventilelement 32 gegen eine Federkraft eines elastischen Elements 44 des Ventils 22 verschoben werden.

Insbesondere ist das Ventilelement 32 zwischen einer in Figur 3 dargestellten Position und einer in Figur 4 dargestellten Position verschiebbar. Mit zunehmendem Fluiddruck verschiebt sich das Ventilelement 32 in einer Richtung zu der in Figur 4 dargestellten Position. Mit abnehmendem Fluiddruck verschiebt sich das Ventilelement 32 in einer Richtung zu der in Figur 3 dargestellten Position. Das Ventilelement 32 ist in einer Richtung zu der in Figur 3 dargestellten Position durch das elastische Element 44, zum Beispiel eine Spiralfeder, vorgespannt. Im Einzelnen wird das Ventilelement 32 durch eine Öffnung 46 im Fluidkanal 30 in den oder aus dem Fluidkanal 30 geschoben. Die in Figur 4 dargestellte Form eines Bereichs der Öffnung 46 ergibt sich bei einer Zylinderform des Fluidkanals 30 und einer Zylinderform des Ventilelements 32, sodass das Ventilelement 32 im Wesentlichen abdichtend zu der Öffnung 46 relativ zu dem Fluidkanal 30 verschoben werden kann.

In der in Figur 3 dargestellten Position des Ventilelements 32 ist ein Strömungsquerschnitt des Fluidkanals 30 minimal, aber größer als Null. Damit wird ein Kühlfluidstrom zu den Einspritzdüsen 24 (siehe Figur 1) nie vollständig unterbrochen. In anderen Ausführungsbeispielen ist es jedoch auch möglich, dass der Strömungsquerschnitt des Fluidkanals 30 auf Null gesetzt wird.

In der in Figur 4 dargestellten Position des Ventilelements 32 ist ein Strömungsquerschnitt des Fluidkanals 30 maximal. Hier ist besonders hervorzuheben, dass das Ventilelement 32 den Strömungsquerschnitt des Fluidkanals 30 überhaupt nicht beeinflusst. Stattdessen ist das Ventilelement 32 außerhalb des Fluidkanals 30 positioniert. Bei einem großen Fluiddruck öffnet das Ventil 22 somit vollständig und das Ventilelement 32 bewirkt keinen Druckverlust.

Das Ventil 22 weist zusätzlich einen Leckagekanal 48 zum Rückführen von Leckagefluid auf. Über den Leckagekanal 48 kann aus dem Fluidkanal 30 und der Steuerfluidkammer 40 entwichenes Kühlfluid abgeführt werden.

Im dargestellten Ausführungsbeispiel kann das Ventilelement 32 in der in Figur 3 dargestellten Position nicht weiter schließen, da das Ventilelement 32 an einem Anschlag 50 (siehe Figur 4) anliegt. Der Anschlag 50 kann eine Kante der Öffnung 46 sein.

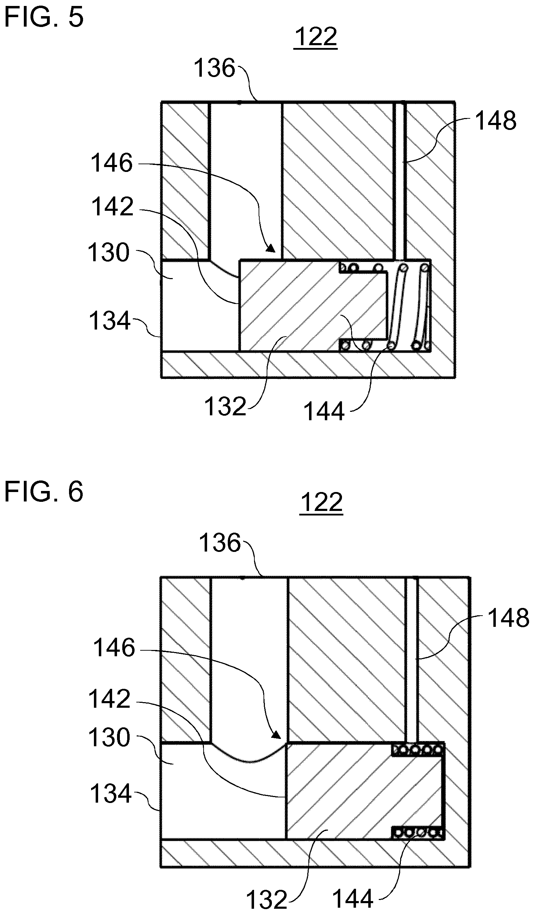

Die Figuren 5 und 6 zeigen ein nicht-erfindungsgemäßes, zweites Ausführungsbeispiel für das zentrale Ventil von Figur 1, das hier zur besseren Unterscheidbarkeit mit dem Bezugszeichen 122 versehen ist.

Das Ventil 122 weist einen Fluidkanal 130 und ein Ventilelement 132 auf. Das Ventil 122 ist wiederum ein Kolbenventil und eigenmediumbetätigt.

Der Fluidkanal 130 erstreckt sich zwischen einer Eintrittsöffnung 134 und einer Austrittsöffnung 136 in einem rechten Winkel. Damit ist das Ventil 122 als ein Eckventil ausgebildet.

Das Ventilelement 132 funktioniert prinzipiell wie das Ventilelement 32 des Ventils 22 der Figuren 3 und 4. Das Ventilelement 132 ist zwischen einer in Figur 5 dargestellten Position und einer in Figur 6 dargestellten Position verschiebbar. Im Unterschied zum ersten Ausführungsbeispiel weist das Ventilelement 132 eine in Richtung zu der Eintrittsöffnung 134 gewandte Stirnfläche des Ventilelements 32 als Steuerfläche 142 auf.

Mit zunehmendem Fluiddruck kann das Ventilelement 132 in einer Richtung entgegen der Federkraft des elastischen Elements 144 durch eine Öffnung 146 im Fluidkanal 130 aus dem Fluidkanal 130 geschoben werden. Aus dem Fluidkanal 130 entwichenes Kühlfluid kann über den Leckagekanal 148 abgeführt werden.

Das Ventil 122 kann beispielsweise in Form eines Einsteckventils zum Einstecken in eine Sacklochbohrung verwendet werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 10: Vorrichtung zur Kolbenkühlung
- 12: Kolben
- 14: Fluidreservoir
- 16: Fluidpumpe (Fluidquelle)
- 18: Fluidkühler
- 20: Fluidfilter
- 22, 122: Ventil
- 24: Einspritzdüse
- 26: Hauptkühlfluidkanal
- 28: Einzelkühlfluidkanal
- 30, 130: Fluidkanal
- 32, 132: Ventilelement (Kolben)
- 34, 134: Eintrittsöffnung
- 36, 136: Austrittsöffnung
- 38: Zuführkanal
- 40: Steuerfluidkammer
- 42, 142: Steuerfläche
- 44, 144: Elastisches Element
- 46, 146: Ventilelement-Öffnung
- 48,148: Leckagekanal
- 50: Anschlag

## Patentansprüche

1. Ventil (22), insbesondere Drosselventil, zum Einstellen eines Kühlfluidflusses von einer Fluidquelle (16) zu mehreren Einspritzdüsen (24) zum Kühlen mehrerer Kolben (12) einer Brennkraftmaschine, aufweisend:
einen Fluidkanal (30) zur Verbindung der Fluidquelle (16) mit den mehreren Einspritzdüsen (24); und
ein Ventilelement (32), das zum Verändern eines Strömungsquerschnitts des Fluidkanals (30) bewegbar, insbesondere verschiebbar, angeordnet ist, wobei das Ventilelement (32) in eine erste Position bewegbar ist, in der der Strömungsquerschnitt unbeeinflusst von dem Ventilelement (32) ist,
wobei:
das Ventilelement (32) eine Steuerfläche (42) aufweist, die sich vorzugsweise senkrecht zu einer Verschiebeachse des Ventilelements (32) erstreckt;
das Kühlfluid auf die Steuerfläche (42) zum Verschieben des Ventilelements (32) wirkt, sodass das Ventilelement (32) abhängig von dem Fluiddruck des Kühlfluids verschoben wird;
das Ventil (22) ein Durchgangsventil ist;
die Steuerfläche (42) in einer Steuerfluidkammer (40) angeordnet ist, die außerhalb des Fluidkanals (30) angeordnet ist, und ein Zuführkanal (38) Kühlfluid von stromaufwärts des Ventilelements (32) in die Steuerfluidkammer (40) leitet,
der Fluidkanal (30) eine Ventilelement-Öffnung (46) aufweist, durch die das Ventilelement (32) bewegbar, insbesondere verschiebbar, ist;
das Ventilelement (32) zwischen der ersten Position und einer zweiten Position, in der der Strömungsquerschnitt minimal oder Null ist, bewegbar, insbesondere verschiebbar, ist; und
die zweite Position von einem Anschlag (50) für das Ventilelement (32) begrenzt ist,
**dadurch gekennzeichnet, dass** der Anschlag (50) ein Teil der Ventilelement-Öffnung (46) ist.

2. Ventil (22) nach Anspruch 1, wobei:
das Ventilelement (32) in der ersten Position den Kühlfluidfluss im Wesentlichen druckverlustfrei durch den Fluidkanal (30) strömen lässt, und/oder
das Ventilelement (32) in der ersten Position keinen Druckverlust des durch den Fluidkanal (30) strömenden Kühlfluids bewirkt.

3. Ventil (22) nach Anspruch 1 oder Anspruch 2, wobei:
das Ventilelement (32) sich bei steigendem Fluiddruck des Kühlfluids in einer Richtung zu der ersten Position bewegt, insbesondere verschiebt, sodass der Strömungsquerschnitt vergrößert wird; und/oder
das Ventilelement (32) sich bei fallendem Fluidruck des Kühlfluids in einer Richtung entgegengesetzt zu der ersten Position bewegt , insbesondere verschiebt, sodass der Strömungsquerschnitt verkleinert wird.

4. Ventil (22) nach einem der vorherigen Ansprüche, wobei:
das Ventilelement (32) in der ersten Position außerhalb des Fluidkanals (30) positioniert ist.

5. Ventil (22) nach einem der vorherigen Ansprüche, wobei:
das Ventil (22) ein Kolbenventil ist.

6. Ventil (22) nach einem der vorherigen Ansprüche, ferner aufweisend: einen Leckagekanal (48) für aus dem Fluidkanal (30) entwichenes Kühlfluid.

7. Ventil (22) nach einem der vorherigen Ansprüche, wobei:
das Ventilelement (32) entgegen der ersten Position, insbesondere durch ein elastisches Element (44), vorgespannt ist.

8. Vorrichtung (10) zum Kühlen mehrerer Kolben (12) einer Brennkraftmaschine, aufweisend:
mehrere Einspritzdüsen (24), die vorzugsweise ohne eigene Fluidventile vorgesehen sind;
eine Fluidquelle (16), insbesondere eine Ölpumpe; und
ein Ventil (22) nach einem der vorherigen Ansprüche, das in Fluidverbindung stromabwärts von der Fluidquelle (16) und stromaufwärts von den mehreren Einspritzdüsen (24) vorgesehen ist.

9. Kraftfahrzeug, insbesondere Nutzfahrzeug, mit einem Ventil (22) nach einem der Ansprüche 1 bis 7 oder einer Vorrichtung (10) nach Anspruch 8.

## Claims

1. A valve (22), in particular a throttle valve, for adjusting a cooling fluid flow from a fluid source (16) to multiple injection nozzles (24) for cooling multiple pistons (12) of an internal combustion engine, having
a fluid channel (30) for connecting the fluid source (16) to the multiple injection nozzles (24); and
a valve element (32) which is arranged so as to be movable, in particular so as to be displaceable, for changing a flow cross section of the fluid channel (30), wherein the valve element (32) can be moved into a first position, in which the flow cross section is not influenced by the valve element (32); wherein:
the valve element (32) has a control surface (42), which preferably extends perpendicularly to a displacement axis of the valve element (32);
the cooling fluid acts on the control surface (42) for displacing the valve element (32), so that the valve element (32) is displaced in a manner dependent on the fluid pressure of the cooling fluid;
the valve (22) is a straight-way valve;
the control surface (42) is arranged in a control fluid chamber (40) which is arranged outside the fluid channel (30), and a feed channel (38) guides cooling fluid into the control fluid chamber (40) from upstream of the valve element (32),
the fluid channel (30) has a valve element opening (46) through which the valve element (32) can be moved, in particular can be displaced;
the valve element (32) can be moved, in particular can be displaced, between the first position and a second position, in which the flow cross section is minimal or zero; and
the second position is limited by a stop (50) for the valve element (32),
**characterized in that** the stop (50) is a part of the valve element opening (46).

2. The valve (22) according to Claim 1, wherein:
in the first position, the valve element (32) allows the cooling fluid flow to flow through the fluid channel (30) substantially without any pressure loss, and/or,
in the first position, the valve element (32) does not bring about any pressure loss of the cooling fluid flowing through the fluid channel (30) .

3. The valve (22) according to Claim 1 or Claim 2, wherein:
in the case of increasing fluid pressure of the cooling fluid, the valve element (32) is moved, in particular is displaced, in a direction towards the first position, so that the flow cross section is increased; and/or,
in the case of decreasing fluid pressure of the cooling fluid, the valve element (32) is moved, in particular is displaced, in a direction opposite to the direction towards the first position, so that the flow cross section is reduced.

4. The valve (22) according to one of the preceding claims, wherein:
in the first position, the valve element (32) is positioned outside the fluid channel (30).

5. The valve (22) according to one of the preceding claims, wherein:
the valve (22) is a piston valve.

6. The valve (22) according to one of the preceding claims, furthermore having:
a leakage channel (48) for cooling fluid which has escaped from the fluid channel (30).

7. The valve (22) according to one of the preceding claims, wherein:
the valve element (32) is preloaded counter to the first position, in particular by an elastic element (44).

8. A device (10) for cooling multiple pistons (12) of an internal combustion engine, having:
multiple injection nozzles (24), which are preferably provided without their own fluid valves;
a fluid source (16), in particular an oil pump; and
a valve (22) according to one of the preceding claims which is provided in fluid connection downstream of the fluid source (16) and upstream of the multiple injection nozzles (24).

9. A motor vehicle, in particular a utility vehicle, having a valve (22) according to one of Claims 1 to 7 or having a device (10) according to Claim 8.

## Revendications

1. Vanne (22), en particulier vanne à étranglement, destinée à régler un débit de fluide de refroidissement allant d'une source de fluide (16) à une pluralité de buses d'injection (24) pour refroidir une pluralité de pistons (12) d'un moteur à combustion interne, ladite vanne comprenant :
un canal de fluide (30) destiné à relier la source de fluide (16) à la pluralité de buses d'injection (24) ; et
un élément de vanne (32) qui est disposé de manière mobile, en particulier coulissante, pour modifier une section d'écoulement transversale du canal de fluide (30), l'élément de vanne (32) étant mobile dans une première position dans laquelle la section d'écoulement transversale n'est pas influencée par l'élément de vanne (32),
l'élément de vanne (32) comportant une surface de commande (42) qui s'étend de préférence perpendiculairement à un axe de coulissement de l'élément de vanne (32) ;
le fluide de refroidissement agissant sur la surface de commande (42) pour faire coulisser l'élément de vanne (32) de sorte que l'élément de vanne (32) coulisse en fonction de la pression du fluide de refroidissement ;
la vanne (22) étant une vanne de passage ;
la surface de commande (42) étant disposée dans une chambre de fluide de commande (40) qui est disposée à l'extérieur du canal de fluide (30) et un canal d'amenée (38) guidant le fluide de refroidissement depuis l'amont de l'élément de vanne (32) jusque dans la chambre de fluide de commande (40),
le canal de fluide (30) comportant une ouverture d'élément de vanne (46) à travers laquelle l'élément de vanne (32) peut être déplacé, en particulier peut coulisser ;
l'élément de vanne (32) étant mobile, notamment coulissant, entre la première position et une deuxième position dans laquelle la section d'écoulement transversale est minimale ou nulle ; et
la deuxième position étant limitée par une butée (50) destinée à l'élément de vanne (32),
**caractérisé en ce que** la butée (50) fait partie de l'ouverture d'élément de vanne (46).

2. Vanne (22) selon la revendication 1,
dans la première position l'élément de vanne (32) permettant au flux de fluide de refroidissement de s'écouler à travers le canal de fluide (30) sensiblement sans perte de pression, et/ou
dans la première position l'élément de vanne (32) ne générant aucune perte de pression du fluide de refroidissement s'écoulant à travers le canal de fluide (30) .

3. Vanne (22) selon la revendication 1 ou la revendication 2,
l'élément de vanne (32) se déplaçant, en particulier coulissant, en direction de la première position, lorsque la pression du fluide de refroidissement augmente, de manière à agrandir la section d'écoulement transversale ; et/ou
l'élément de vanne (32) se déplaçant, en particulier coulissant, dans une direction opposée à la première position, lorsque la pression du fluide de refroidissement diminue, de manière à réduire la section d'écoulement transversale.

4. Vanne (22) selon l'une des revendications précédentes,
l'élément de vanne (32) étant positionné dans la première position à l'extérieur du canal de fluide (30) .

5. Vanne (22) selon l'une des revendications précédentes,
la vanne (22) étant une vanne à piston.

6. Vanne (22) selon l'une des revendications précédentes, ladite vanne comportant en outre :
un canal de fuite (48) destiné au fluide de refroidissement qui s'est échappé du canal de fluide (30) .

7. Vanne (22) selon l'une des revendications précédentes,
l'élément de vanne (32) étant précontraint à l'opposé de la première position, notamment par un élément élastique (44).

8. Dispositif (10) de refroidissement d'une pluralité de pistons (12) d'un moteur à combustion interne, ledit dispositif comprenant :
une pluralité de buses d'injection (24) qui sont de préférence prévues sans vannes de fluide propres ;
une source de fluide (16), notamment une pompe à huile ; et
une vanne (22) selon l'une des revendications précédentes qui est prévue pour être en communication fluidique en aval de la source de fluide (16) et en amont de la pluralité de buses d'injection (24).

9. Véhicule automobile, notamment véhicule utilitaire, comprenant une vanne (22) selon l'une des revendications 1 à 7 ou un dispositif (10) selon la revendication 8.
